# EUROPÄISCHE PATENTANMELDUNG

(11) **EP 3 156 164 A1**
(43) Veröffentlichungstag der Anmeldung: **19.04.2017**
(21) Anmeldenummer: 15189765.9
(22) Anmeldetag: 14.10.2015
(51) Int. Cl.: B23K 15/08, B22F 3/105, B23K 26/34, B23K 26/362, B29C 67/00, B23K 101/00, B23K 103/10, B23K 103/12, B23K 103/18

(54) **VERFAHREN ZUR HERSTELLUNG EINES WERKSTÜCKS DURCH GENERATIVES HERSTELLEN ; ENTSPRECHENDES WERKSTÜCK**

(71) Anmelder: Siemens Aktiengesellschaft, 80333 München (DE)
(72) Erfinder: Brunhuber, Christian, 91275 Auerbach (DE); Denneler, Stefan, 81371 München (DE); Fischle, Moritz, 80469 München (DE); Hanebuth, Henning, 85652 Pliening OT Gelting (DE); Walter, Steffen, 85667 Oberpframmern (DE)

(57) **Zusammenfassung**

Die Erfindung betrifft ein Verfahren zur Herstellung eines Werkstücks (100). Das Verfahren umfasst das Bereitstellen eines Substrats (1) mit einer vorbestimmten Oberflächenstruktur (2), das generatives Herstellen eines Materials (5) für das Werkstück (100) auf der Oberflächenstruktur (2), so dass die Oberflächenstruktur (2) eine Grundfläche (3) des herzustellenden Werkstücks (100) definiert und das anschließende Ablösen des Substrats (1). Weiterhin umfasst die Erfindung ein Werkstück (100), umfassend die Grundfläche (3), wobei ein Herstellungsverfahren für das Werkstück (100) das generative Herstellen eines Materials (5) für das Werkstück (100) auf der vorbestimmten Oberflächenstruktur (2) umfasst, und wobei die Oberflächenstruktur (2) die Grundfläche (3) definiert.

## Beschreibung

Die vorliegende Erfindung betrifft ein Verfahren zur Herstellung eines Werkstücks, beispielsweise eines hochtemperaturbeständigen Werkstücks, wie einem Werkstück oder Bauteil, welches im Heißgaspfad einer Strömungsmaschine, beispielsweise einer Gasturbine, eingesetzt wird. Weiterhin betrifft die vorliegende Erfindung ein Werkstück, welches mit dem genannten Verfahren hergestellt wurde oder herstellbar ist.

Additive oder generative Herstellungsverfahren (englisch "rapid prototyping") zur Herstellung von dreidimensionalen (3D-) Strukturen, wie beispielsweise selektivem Laserschmelzen (SLM englisch für "selective laser melting") und Auftragschweißen, beispielsweise Laserauftragschweißen (im Englischen "laser cladding", oder LMD für "laser metal deposition") werden beispielsweise bei der Herstellung als auch bei der Reparatur von heißgasbeaufschlagten oder hochtemperaturbelasteten Teilen von Gasturbinen eingesetzt. Das SLM-Verfahren erlaubt den generativen Aufbau komplexer Formkörper oder Werkstücke mit relativ feiner Innenstruktur, beispielsweise mit Feinheiten oder Strukturgrößen zwischen 80 µm und 100 µm oder weniger.

Das SLM-Verfahren gehört zu den Pulverbettverfahren, wobei eine Verkleinerung der Strukturgrößen oder Verbesserung der Oberflächenrauheit in erster Linie durch eine Verkleinerung der Pulverfraktionen bis herab zu einer mittleren Pulverkorngröße von ca. 20-40 µm erreicht werden kann. Noch kleinere Pulverkörner sind in der Regel nicht mehr förderbar und/oder anwendbar. Eine erreichbare Oberflächenrauheit von mittels SLM-Verfahren hergestellten Oberflächen liegt etwa zwischen 60 µm und 100 µm. Das SLM-Verfahren erlaubt weiterhin Aufbauraten oder Abscheidungsraten von 3-8 cm³/h.

Im Gegensatz zum genannten Auftragschweiß- oder LMD-Verfahren, erlaubt der SLM-Prozess entweder den Aufbau einer Struktur entlang lediglich einer Achse und/oder es muss auf Stützstrukturen zurückgegriffen werden, welche beispielsweise überhängende oder hohle zu fertigende Strukturen während der Herstellung abstützen und gegebenenfalls für eine notwendige Wärmeabfuhr ermöglichen. Diese Stützstrukturen benötigen jedoch unnötiges Abscheidungsmaterial und müssen überdies nachträglich noch aufwendig von der eigentlich gewünschten Struktur getrennt oder entsprechend nachbearbeitet werden.

Hingegen kann beim LMD-Prozess der generative oder additive Aufbau entlang von mindestens drei Achsen (beispielsweise drei zueinander senkrechten Raumrichtungen) erfolgen. Beim LMD-Verfahren können alternativ fünf- bzw. achtachsige Vorrichtungen zum Einsatz kommen, bei denen beispielsweise eine Basis oder Unterlage für das aufzubauende Material als auch ein Abscheidungs- oder Herstellungskopf oder die entsprechende Pulverdüse bzw. Laservorrichtung in drei aufeinander senkrechten Raumrichtungen beweglich sind. Für eine achtachsige Vorrichtung, also mit acht geometrischen Freiheitsgraden, kann die Unterlage zusätzlich um zwei verschiedene Achsen (Rotations- und/oder Kippachsen) beweglich sein.

Das LMD-Verfahren ist für gewöhnlich ein CAD- ("computer aided design") und/oder roboterunterstütztes Verfahren, wobei 3D-Strukturen quasi isotrop aufgebaut oder hergestellt werden können. Im Gegensatz zum SLM-Verfahren kann hier, während des Aufbaus der Struktur oder des Werkstücks ebenfalls zwischen mehreren Materialien hin und her "geschaltet" werden. Das LMD-Verfahren erlaubt Aufbau oder Abscheidungsraten von 30 bis 40 cm³/h. Ein Nachteil des LMD-Verfahrens betrifft die Schwierigkeit, Innenstrukturen oder innen liegende Strukturen oder Geometrien mit Strukturgrößen oder Strukturabmessungen von weniger als 150 µm herzustellen, wodurch der additiven Fertigung diesbezüglich Grenzen gesetzt sind.

Insbesondere bei der Herstellung von Komponenten für Strömungsmaschinen, beispielsweise Gasturbinen, können Innenstrukturen mit Strukturgrößen von teilweise deutlich unterhalb von 100 µm oder 150 µm für eine Vielzahl von möglichen Komponenten für verschiedene Anwendungen erwünscht oder erforderlich sein. Solche Strukturen sind heute lediglich mittels zeit- und kostenaufwendiger Gießtechnologie herstellbar.

Auftragschweiß-Verfahren sind beispielsweise bekannt aus EP 2 756 909 A1.

Es ist daher eine Aufgabe der vorliegenden Erfindung, ein verbessertes Verfahren zur Herstellung eines Werkstücks oder eines Bauteils anzugeben, insbesondere ein Verfahren, mit welchem Bauteile kosten- und/oder zeiteffizienter hergestellt werden können oder Bauteile mit verbesserten Eigenschaften hergestellt werden können.

Diese Aufgabe wird durch die Merkmale der unabhängigen Patentansprüche gelöst. Vorteilhafte Ausgestaltungen sind Gegenstand der abhängigen Patentansprüche.

Ein Aspekt der vorliegenden Erfindung betrifft ein Verfahren zur Herstellung eines Werkstücks umfassend das Bereitstellen eines Substrats mit einer vorbestimmten Oberflächenstruktur. Das Werkstück ist vorzugsweise ein hochtemperaturbeständiges Bauteil für den Einsatz im Heißgaspfad einer Strömungsmaschine, beispielsweise einer Gasturbine zur Energieerzeugung.

Die vorbestimmte Oberflächenstruktur ist vorzugsweise eine mikroskopische Oberflächenstruktur. Mit anderen Worten weist die vorbestimmte Oberflächenstruktur vorzugsweise mindestens ein mikroskopisches Oberflächenstrukturelement auf. Die Oberflächenstruktur ist weiterhin vorbestimmt, d.h. beispielsweise bezüglich seiner Topographie oder Struktur für eine spezifische Anwendung festgelegt.

Das Verfahren umfasst weiterhin das generative Herstellen eines Materials für das Werkstück oder Bauteil auf der vorbestimmten Oberflächenstruktur, so dass die Oberflächenstruktur eine Grundfläche des herzustellenden Werkstücks definiert. Das generative Herstellen oder die generative Fertigung bedeutet vorliegend vorzugsweise den urformenden oder additiven Aufbau von 3D-Werkstücken oder Bauteilen.

Bei der Grundfläche handelt es sich vorzugsweise um die Oberfläche einer Unterseite des Werkstücks, deren Struktur bei der Herstellung vorzugsweise zuerst aufgebaut oder abgeschieden wird. In diesem Sinne ist das Substrat vorzugsweise formgebend für das Werkstück oder das Bauteil, wobei die Struktur des Substrats durch das erfindungsgemäße Verfahren auf die Grundfläche des herzustellenden Werkstücks übertragen werden kann oder darauf abgebildet wird. In diesem Sinne kann die Grundfläche des Werkstücks beispielsweise ein Negativ oder Positiv der vorbestimmten Oberflächenstruktur aufweisen oder bilden. Vorzugsweise bildet die Oberflächenstruktur das entsprechende Negativ oder stellt dieses dar und die Grundfläche bildet das entsprechende Positiv oder stellt dieses dar. Vorzugsweise stellt die Grundfläche weiterhin einen Abdruck der Oberflächenstruktur des Substrates dar, definiert diesen oder umfasst den genannten Abdruck. In diesem Zusammenhang kann das Werkstück gemäß der vorliegenden Offenbarung ebenfalls eine (abgebildete) Oberflächenstruktur aufweisen.

Das Verfahren umfasst weiterhin nach dem generativen Herstellen das Ablösen des Substrates, beispielsweise mittels einer Säurebehandlung oder weiteren Methoden des Standes der Technik.

Das beschriebene Verfahren kann weitere Verfahrensschritte umfassen, beispielsweise eine Temperaturbehandlung nach dem generativen Herstellen des Materials, wobei insbesondere eine für das Werkstück günstige oder erforderliche Kristallstruktur oder Materialphase eingestellt wird. Dabei können Kristallfehler im Material ausgeheilt und/oder innere Spannungen im Material reduziert werden.

Als Vorteil des beschriebenen Verfahrens ist es möglich, gemäß der vorliegenden Erfindung, Innenstrukturen auf der Grundfläche oder entsprechende Abmessungen der Innenstrukturen herzustellen, welche beispielsweise ausschließlich über konventionelle LMD-Technologie, d.h. ohne die erfindungsgemäße Definition der Grundfläche, nicht erreicht werden können. Dies wird insbesondere dadurch erreicht, dass die vorbestimmte Oberflächenstruktur durch das beschriebene Verfahren die Grundfläche für das durch das LMD-Verfahren herzustellende Werkstück über das Substrat definiert.

Nach dem Bereitstellen des Substrates mit der vorbestimmten Oberflächenstruktur kann nun in beliebiger Weise jedes gewünschte 3D-Werkstück oder Bauteil, z.B. mittels Auftragschweißen, mit der durch die Oberflächenstruktur definierten Grundfläche hergestellt werden. Insbesondere kann dabei auf die zeitaufwendige Herstellung von Gießkernen oder Gussbauteilen durch konventionelle Gießtechnologie verzichtet werden, wobei bei der Abformung komplexer, mikroskopischer Innenstrukturen oftmals ein monatelanger (beispielsweise sechs Monate) Entwicklungsaufwand betrieben werden muss. Im Gegenzug können die oben genannten Vorteile des LMD-Prozesses ausgenutzt werden.

In einer Ausgestaltung wird das generative Herstellen mittels Auftragschweißen, vorzugsweise Laserauftragschweißen, insbesondere Laserpulverauftragschweißen, durchgeführt. Gemäß dieser Ausgestaltung ist das Verfahren für die generative Herstellung mit Vorteil ein Auftragschweiß-Verfahren.

In einer Ausgestaltung werden bei dem generativen Herstellen des Materials für das Werkstück, insbesondere durch Laserauftragschweißen, die Belichtungszeit beziehungsweise Expositionszeit, die Laserleistung und/oder weitere Parameter entsprechend der gewünschten Oberflächenstruktur des Werkstücks eingestellt. Dabei kann beispielsweise die Kornorientierung oder Korngröße des aufzubauenden Materials für das Werkstück eingestellt oder beeinflusst werden, wodurch beispielsweise die Kriechfestigkeit des Materials oder die Rissbeständigkeit oder Duktilität optimiert werden können. Alternativ oder zusätzlich kann durch die genannte Ausgestaltung Bindefehlern, beispielsweise bezüglich einer Kohäsion oder Adhäsion der beteiligten Materialien, vorgebeugt werden.

In einer Ausgestaltung ist die Grundfläche eine bezüglich einer Kontur des herzustellenden Werkstücks zumindest teilweise nach innen gerichtete oder innen liegende bzw. innen angeordnete Oberfläche. Mit anderen Worten liegt die Grundfläche vorzugsweise innerhalb der genannten Kontur. Die Kontur beschreibt in diesem Sinne vorzugsweise eine einhüllende Oberfläche des Werkstücks oder Bauteils.

In einer Ausgestaltung erfolgt das Bereitstellen des Substrates derart, dass die Oberflächenstruktur zur Definition der Grundfläche mindestens ein Oberflächenstrukturelement, vorzugsweise eine Vielzahl von Oberflächenstrukturelementen, mit einer Abmessung von (jeweils) weniger als 100 µm aufweist.

In einer Ausgestaltung erfolgt das Bereitstellen des Substrates derart, dass die Oberflächenstruktur zur Definition der Grundfläche mindestens ein Oberflächenstrukturelement, vorzugsweise eine Vielzahl von Oberflächenstrukturelementen, mit einer Abmessung von (jeweils) weniger als 80 µm aufweist.

Der erfinderische Vorteil des beschriebenen Verfahrens betrifft eine verbesserte "Auflösung" von Strukturen oder Merkmalen auf der Grundfläche, beziehungsweise eine erhöhte Fertigungsgenauigkeit. Weiterhin kann auf aufwendige Stützstrukturen verzichtet werden.

Es ist insbesondere möglich, Mikrostrukturen mit einzelnen Strukturgrößen von weniger als 100 µm beispielsweise auf der Innenseite von schwer zugänglichen Komponenten oder Werkstücken herzustellen, die weder mit Pulverbettverfahren, beispielsweise SLM-Technologie, noch mit Frästechnologie - mangels Zugänglichkeit des Fräswerkzeug auf der genannten Innenseite durch die Größe der Fräsköpfe - erreicht werden können.

In einer Ausgestaltung ist das Material für das Werkstück eine nickel-oder kobaltbasierte Superlegierung oder ein Ausgangsstoff dafür.

In einer Ausgestaltung umfasst das Material für das Werkstück eine nickel-oder kobaltbasierte Superlegierung oder ein Ausgangsstoff dafür.

Diese Ausgestaltungen sind insbesondere für den Einsatz des Werkstücks oder Bauteils im Bereich von Strömungsmaschinen zweckmäßig.

In einer Ausgestaltung ist das Werkstück ein hochtemperaturbeständiges Bauteil, beispielsweise ein Bauteil, welches in oder im Zusammenhang mit dem Heißluft- oder Heißgaspfad einer Strömungsmaschine, wie einer Gasturbine, eingesetzt wird. Hochtemperaturbeständig kann insbesondere bedeuten, dass das Werkstück oder Bauteil bzw. sein Material hochwarmfest ist, einen Schmelzpunkt von über 1000 °C, vorzugsweise 1200 °C, aufweist und/oder beispielsweise Einsatztemperaturen von 80 %, 90 % oder mehr des Schmelzpunktes des entsprechenden Materials erreicht.

In einer Ausgestaltung erfolgt das Bereitstellen des Substrates derart, dass das Substrat eine Keramik oder ein Gussbauteil umfasst, welches die Oberflächenstruktur bildet. Gegenständlich ausgedrückt kann das Substrat die Keramik oder das Gussbauteil umfassen. Das Bauteil kann beispielsweise durch Feinguss her- oder bereitgestellt werden.

In einer Ausgestaltung erfolgt das Bereitstellen derart, dass die Oberflächenstruktur als Hauptbestandteil ein Refraktärmetall oder hochschmelzendes Metall umfasst.

Gemäß dieser Ausgestaltung wird die Oberflächenstruktur, vorzugsweise durch entsprechende Ausbildung des Substrats, durch Elektronenstrahlschmelzen hergestellt. Das Elektronenstrahlschmelzen erlaubt als Pulverbettverfahren insbesondere - analog zum SLM-Verfahren - das additive Fertigen von 3D-Strukturen, d.h. nicht nur quasi-zweidimensionalen Schichtstrukturen. Dabei werden - zum Schmelzen des Materials oder Metalls - durch den Elektronenstrahl noch höhere Temperaturen erreicht. Gemäß dieser Ausgestaltung kann vorteilhafterweise auch auf eine Keramik als Substrat verzichtet werden. Insbesondere erlaubt auch die Herstellung der Oberflächenstruktur mittels Elektronenstrahlschmelzen eine gegenüber einem Gießkern vereinfachte und beschleunigte Bereitstellung der Oberflächenstruktur. Allerdings sind gemäß dieser Ausgestaltung unter Umständen nicht ganz so kleine oder filigrane Innenstrukturen erreichbar wie mithilfe der Gießtechnologie. Jedenfalls erlaubt diese Ausgestaltung bezüglich der Strukturgrößen die Herstellung von kleineren oder filigraneren Oberflächenstrukturen im Vergleich zu Werkstücken, die ausschließlich mittels LMD-Technologie hergestellt wurden.

Gemäß einer Ausgestaltung wird die Oberflächenstruktur, vorzugsweise durch entsprechende Ausbildung des Substrats, durch selektives Laserschmelzen hergestellt, beispielsweise mit Aluminium oder Kupfer als Hauptbestandteil. Die Vorteile dieser Ausgestaltung sind vergleichbar zu denjenigen, die in der vorherigen Ausgestaltung beschrieben wurden. Es wird insbesondere eine Verbesserung des Herstellungsverfahrens des Werkstücks durch die Vermeidung keramischer Gussbauteile oder Gießkerne erreicht und/oder eine höhere geometrische Auflösung von Oberflächenstrukturelementen.

In einer Ausgestaltung wird das generative Herstellen mittels Laserpulverauftragschweißen durchgeführt, wobei, während des generativen Herstellens, ein Pulverfokus - einer entsprechenden Vorrichtung - zwischen der Oberflächenstruktur und einem Laserfokus eingestellt wird. Dieser Ausgestaltung entspricht vorzugsweise diejenigen, bei der ein keramisches Bauteil als Substrat verwendet wird, und/oder wobei die Oberflächenstruktur durch selektives Laserschmelzen her- oder bereitgestellt wird. Als Vorteil, kann vermieden werden, dass die Oberflächenstruktur während des generativen Herstellens durch die Bestrahlung mit dem Laserstrahl verbrennt oder anschmilzt.

Ein weiterer Aspekt der vorliegenden Erfindung betrifft ein Werkstück oder Bauteil, welches nach dem hier beschriebenen Verfahren hergestellt wurde oder herstellbar ist, beispielsweise ein Werkstück umfassend die Grundfläche, wobei das Herstellungsverfahren für das Werkstück das generative Herstellen des Materials für das Werkstück auf der vorbestimmten Oberflächenstruktur des Substrats umfasst, wobei die Oberflächenstruktur die Grundfläche definiert. Mit anderen Worten umfasst die Grundfläche einen Abdruck der Oberflächenstruktur oder einen Teil der Oberflächenstruktur. Die Grundfläche kann ebenfalls einen Abdruck der vorbestimmten Oberflächenstruktur oder einen Teil davon darstellen.

Das beschriebene Werkstück weist gemäß des beschriebenen Herstellungsverfahrens vorzugsweise spezifische und oder charakteristische Eigenschaften auf. Beispielsweise kann das Material oder Werkstück hinsichtlich seiner Struktur- oder Oberflächeneigenschaften durch einschlägige Verfahren der Oberflächen oder Strukturanalyse von Werkstücken, welche mittels anderer Verfahren hergestellt wurden oder herstellbar sind, unterschieden werden. Solche Verfahren sind beispielsweise Transmissionselektronenmikroskopie (TEM), energiedispersive Röntgenanalyse und/oder Röntgenfluoreszenzanalyse. Durch diese Verfahren kann insbesondere die Kristallstruktur des entsprechenden Materials untersucht und eine Elementanalyse durchgeführt werden.

Merkmale, die sich vorliegend auf das Verfahren beziehen, können sich ebenfalls auf das Werkstück beziehungsweise das Bauteil beziehen, und umgekehrt.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen.
- Figur 1: zeigt schematisch den Ablauf eines Verfahrens zur Herstellung eines Werkstücks.
- Figur 2: zeigt schematisch ein Werkstück, das mittels des in Figur 1 gezeigten Verfahrens hergestellt wurde.
- Figur 3: zeigt schematisch die Einstellung eines Teils einer Vorrichtung zum Auftragschweißen gemäß dem beschriebenen Verfahren.

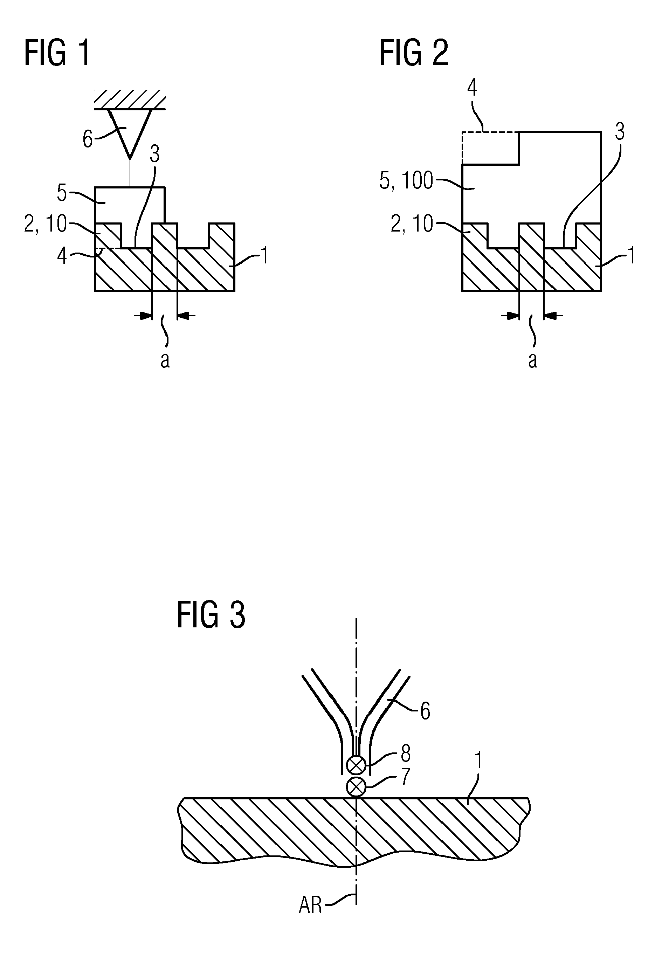

Figur 1 zeigt schematisch den Ablauf eines Verfahrens zur Herstellung eines Werkstücks oder Bauteils (vergleiche Bezugszeichen 100 in Figur 2), beispielsweise eines Bauteils für eine Strömungsmaschine, wie eine Gasturbine. Bei dem Werkstück 100 handelt sich vorzugsweise um ein im Zusammenhang mit einem Heißluftpfad einer Gasturbine angewendeten, hochtemperaturbeständigen Werkstück. Das Werkstück oder Bauteil besteht vorzugsweise aus einer nickel- oder kobaltbasierten Superlegierung oder umfasst ein entsprechendes Material.

Das Verfahren umfasst das Bereitstellen eines Substrats 1, welches in Figur 1 bzw. Figur 2 in einer Seiten- oder Schnittansicht dargestellt ist. Das Substrat 1 umfasst eine vorbestimmte Oberflächenstruktur 2. Bei der vorbestimmten Oberflächenstruktur 2 handelt es sich vorzugsweise um eine Oberflächenstruktur mit Oberflächenstrukturelementen 10, wie in den Figuren 1 und 2 angedeutet. Die Oberflächenstrukturelementen 10 haben jeweils einen rechteckigen Querschnitt. Die Oberflächenstrukturelemente 10 sind vorzugsweise mikroskopisch klein. Mit anderen Worten haben die Oberflächenstrukturelemente 10, vorzugsweise jedes einzelne oder mindestens eines von den Oberflächenstrukturelementen 10 eine äußere Abmessung oder Dimension im Mikrometerbereich, vorzugsweise kleiner als 100 µm, besonders bevorzugt kleiner als 80 µm oder noch kleiner (vergleiche Abmessung a weiter unten beschrieben). Die Oberflächenstruktur 2 ist vorzugsweise für die Herstellung des Werkstücks vorbestimmt oder festgelegt. Mit anderen Worten ist die Topografie der Oberflächenstruktur festgelegt.

Obwohl dies nicht explizit in den Figuren dargestellt ist, können die Oberflächenstrukturelemente oder auch nur einige von ihnen unterschiedlich sein und/oder untereinander unterschiedliche Abmessungen haben.

Das Verfahren umfasst weiterhin das generative Herstellen eines Materials 5 für das Werkstück auf der Oberflächenstruktur 2, so dass die Oberflächenstruktur 2 eine Grundfläche 3 des herzustellenden Werkstücks definiert. Dies ist in Figur 1 dadurch angedeutet, dass die Oberflächenstruktur 2 ein Negativ und die Grundfläche 3 bzw. deren Oberflächenstruktur (nicht explizit gekennzeichnet) ein entsprechendes Positiv bildet. Mit anderen Worten ist die Oberflächenstruktur 2 des Substrates 1 formgebend für die Grundfläche des Werkstücks 100. Das abgeschiedene Material bzw. das fertige Werkstück (vergleiche Figur 2) weisen demgemäß die Grundfläche 3 auf.

In Figur 1 ist das Werkstück (vergleiche Bezugszeichen 100 in Figur) noch nicht fertig hergestellt. Im Folgenden kann daher das Material 5 synonym mit dem Werkstück 100 bezeichnet sein. Das Material kann insbesondere ein Ausgangsmaterial für das Werkstück sein.

Weiterhin kann das Verfahren zur Herstellung des Werkstücks eine oder mehrere Wärmebehandlungen, beispielsweise zur Einstellung von bestimmten Phasenausscheidungen umfassen. Dabei kann es sich insbesondere um zweckmäßige PhasenAusscheidungen oder Einstellungen der γ oder γ' -Phasen des jeweiligen herzustellenden Materials der Superlegierung handeln.

Das generative Herstellen erfolgt vorzugsweise mittels Auftragschweißen, beispielsweise Laserauftragschweißen (LMD), insbesondere Laserpulverauftragschweißen. Die genannten Verfahren oder Techniken zum Auftragschweißen laufen vorzugsweise durch CAD- und/oder robotergestützt ab oder können entsprechend gesteuert werden. Eine entsprechende Laserauftragschweiß-Vorrichtung ist in Figur 1 mit dem Bezugszeichen 6 angedeutet.

Das Material 5 zur Herstellung des Werkstücks 100 wird gemäß dem beschriebenen Verfahren vorzugsweise durch Laserpulverauftragschweißen gefertigt oder hergestellt. Dabei wird im Rahmen des beschriebenen Verfahrens zur Herstellung des Werkstücks, dieses vorzugsweise entsprechend den für die gewünschte (3D-) Struktur zweckmäßigen Materialeigenschaften gefertigt. Dabei können Prozessparameter wie die Laserleistung, die Belichtung oder Expositionszeit des Lasers oder weitere Parameter entsprechend der gewünschten Materialphase eingestellt werden. Weiterhin kann beispielsweise an schwer zugänglichen Stellen oder Kanten des herzustellenden Werkstücks eine längere Belichtungszeit erforderlich sein, als an anderen Stellen. Auch kann bei einer "Abrasterung" währen des Materialaufbaus ein Apparaturkopf der Auftragschweiß-Vorrichtung über oder mithilfe einer Rückkoppelungsschleife geführt werden.

Figur 2 zeigt unter anderem das fertig hergestellte Werkstück oder Bauteil 100, welches mittels des beschriebenen Verfahrens hergestellt oder herstellbar ist. Das Werkstück 100 ist noch einstückig mit dem Substrat 1 verbunden. Dementsprechend stellt die Grundfläche 3 des Substrats einen Abdruck der Oberflächenstruktur 2 dar oder umfasst diesen. Vorteilhafterweise wird durch das beschriebene Verfahren durch die Vorgabe der Oberflächenstruktur auf dem Substrat, die Grundfläche des herzustellenden Werkstücks definiert, abgebildet oder abgeformt, um die Oberflächenstruktur auf das Werkstück zu übertragen und somit eine besonders hochauflösend und oder mikroskopisch strukturierte Grundfläche des Werkstücks zu erzeugen.

Das Werkstück 100 in Figur 2 weist eine Kontur 4 auf, welche das Werkstück 100 einschließlich dessen Oberflächenstrukturelemente umschließt oder einhüllt. Die Kontur 4 ist durch die gestrichelte Linie in Figur 2 und im Zusammenhang mit dem Material 5 auch in Figur 1 dargestellt. Die Grundfläche 3 ist bezüglich der Kontur 4 des herzustellenden Werkstücks 100 eine zumindest teilweise innen liegende Oberfläche des Werkstücks 100.

Die in Figur 1 und 2 gezeigten Oberflächenstrukturelemente 10 oder zumindest eines von ihnen haben vorzugsweise eine Abmessung a von weniger als 100 µm. Die Abmessung bezieht sich vorzugsweise auf eine Breite (vergleiche horizontale Richtung in den Figuren 1 und 2) der jeweiligen Oberflächenstrukturelemente 10 und nicht auf eine entsprechende Tiefe oder Höhe. Die Breite kann demgemäß eine Richtung entlang der Kontur bezeichnen.

Je kleiner also die Breite oder Abmessung a der Oberflächenstrukturelemente 10 des Substrats 1, desto kleiner, feiner oder filigraner wird auch die Grundfläche 3 des Werkstücks strukturiert.

Besonders bevorzugt kann mindestens eines der genannten Oberflächenstrukturelemente 10 oder alle eine äußere Dimension oder Abmessung a von weniger als 80 µm, oder noch weniger haben.

Gemäß einer Ausführungsform der vorliegenden Erfindung ist das Substrat 1 eine Keramik oder ein Gussbauteil oder umfasst beispielsweise eine Keramik zumindest an der Oberflächenstruktur 2. Das Substrat 1 kann beispielsweise durch Feinguss unter Zuhilfenahme von keramischen Gießkernen her- oder bereitgestellt werden. Vorzugsweise ist oder wird die Oberflächenstruktur 2 durch einen keramischen Gießkern gebildet. Der Gießkern besteht beispielsweise aus Aluminiumoxid, beispielsweise Al₂O₃, oder Siliziumdioxid (SiO₂) oder umfasst eines dieser Materialien. Mit anderen Worten kann das Bereitstellen gemäß dem beschriebenen Verfahren entsprechend durchgeführt werden.

Weiterhin weist der Gießkern vorzugsweise auf der Außenseite eine sehr feine Pulverkörnung auf, um zweckmäßigerweise eine feine, beispielsweise mikroskopisch kleine Oberflächenstrukturen "auflösen" zu können. Mit zunehmendem Abstand von der Oberflächenstruktur kann das Material dieses Substrats (des Gießkerns) eine immer poröser oder gröber werdende Körnung oder Gradierung umfassen, um gleichzeitig noch eine ausreichende (thermische) Schockbeständigkeit zu haben. Ein derartig gradiertes Bauteil weist vorzugsweise eine besonders kleine und technologisch erwünschte Oberflächenrauheit von lediglich 50 µm oder weniger, beispielsweise 30 µm, auf. Bei der genannten Rauheit kann es sich um eine mittlere Rauheit, eine quadratische Rauheit oder einen Mittenrauwert handeln.

Gemäß einer Ausgestaltung umfasst das Substrat zumindest an der oder als Oberflächenstruktur 2 ein Refraktärmetall, beispielsweise Tantal, Zirkonium, Molybdän oder Wolfram oder ein anderes hochschmelzendes, beispielsweise unedles, Metall der vierten, fünften oder der sechsten Nebengruppe des Periodensystems. Gemäß dieser Ausgestaltung wird oder ist die Oberflächenstruktur vorzugsweise durch Elektronenstrahlschmelzen hergestellt.

Gemäß einer weiteren Ausgestaltung ist die Oberflächenstruktur 2 durch selektives Laserschmelzen hergestellt. Vorzugsweise weist die Oberflächenstruktur 2 des Substrats 1 gemäß dieser Ausgestaltung Kupfer oder Aluminium als Hauptbestandteil auf. Alternativ kann das Substrat 1 aus anderen Materialien bestehen oder diese Materialien umfassen.

Obwohl dies in den Figuren nicht explizit dargestellt ist umfasst das Verfahren weiterhin das Ablösen des Substrats 1 nach dem generativen Herstellen. Das Ablösen des Substrats kann für alle beschriebenen Ausführungsformen selektiv auf chemischem Wege erfolgen. Beispielsweise kann, unabhängig davon, ob das Substrat oder die Oberflächenstruktur metallisch oder keramisch ist, das Werkstück chemisch abgelöst werden. Beispielsweise kann im Fall eines Substrats mit einer Aluminiumoberflächenstruktur, das Ablösen mittels konzentrierter Salzsäure und bei Temperaturen zwischen 50°C und 80 °C erfolgen.

Figur 3 zeigt schematisch die Einstellung eines Teils einer Vorrichtung zum Auftragschweißen gemäß einer Ausgestaltung des Verfahrens. Diese Ausgestaltung bezieht sich insbesondere auf das generative Herstellen mittels Laserpulverauftragschweißen. Entsprechend ist eine Laserauftragschweiß-Vorrichtung 6 angedeutet. Weiterhin ist gemäß dieser Ausgestaltung die Oberflächenstruktur 2 des Substrats 1, wie oben beschrieben, vorzugsweise aus einer Keramik oder mittels selektivem Laserschmelzen aus einem Metall, oder dieses umfassend, gebildet.

Es ist in Figur 3 insbesondere zu erkennen, dass die Laserauftragschweiß-Vorrichtung 6 einen Pulverfokus 7 aufweist. Weiterhin weist die Laserauftragschweiß-Vorrichtung 6 einen Laserfokus 8 auf. Der Pulverfokus 7 ist/wurde in vertikaler Richtung, beispielsweise entlang einer Aufbaurichtung AR des Werkstücks 100 zwischen dem Substrat 1 und einem Laserfokus 8 eingestellt. Dadurch kann vorteilhafterweise vermieden werden, dass durch den Einfluss des Laserstrahls die Oberflächenstruktur, welche gemäß dieser Ausgestaltung vorzugsweise durch eine Keramik oder ein nicht hochschmelzendes Metall gebildet ist, schmilzt oder verbrannt wird.

Die Erfindung ist nicht durch die Beschreibung anhand der Ausführungsbeispiele auf diese beschränkt, sondern umfasst insbesondere jede Kombination von Merkmalen in den Patentansprüchen, auch wenn dieses Merkmal oder diese Kombination selbst nicht explizit in den Patentansprüchen oder Ausführungsbeispielen angegeben ist.

## Patentansprüche

1. Verfahren zur Herstellung eines Werkstücks (100) umfassend die folgenden Schritte:
- Bereitstellen eines Substrats (1) mit einer vorbestimmten Oberflächenstruktur (2),
- generatives Herstellen eines Materials (5) für das Werkstück (100) auf der Oberflächenstruktur (2), so dass die Oberflächenstruktur (2) eine Grundfläche (3) des herzustellenden Werkstücks (100) definiert und
- Ablösen des Substrats (1).

2. Verfahren nach Anspruch 1, wobei das generative Herstellen mittels Auftragschweißen durchgeführt wird.

3. Verfahren nach Anspruch 1 oder 2, wobei die Grundfläche (3) eine bezüglich einer Kontur (4) des herzustellenden Werkstücks (100) zumindest teilweise innen liegende Oberfläche des Werkstückes (100) ist.

4. Verfahren nach mindestens einem der vorhergehenden Ansprüche, wobei das Bereitstellen derart erfolgt, dass die Oberflächenstruktur (2) zur Definition der Grundfläche (3) mindestens ein Oberflächenstrukturelement (10) mit einer Abmessung von weniger als 100 µm aufweist.

5. Verfahren nach mindestens einem der vorhergehenden Ansprüche, wobei das Material (5) eine nickel- oder kobaltbasierte Superlegierung oder ein Ausgangsstoff dafür ist.

6. Verfahren nach mindestens einem der vorhergehenden Ansprüche, wobei das Werkstück (100) ein hochtemperaturbeständiges Bauteil ist.

7. Verfahren nach mindestens einem der vorhergehenden Ansprüche, wobei das Bereitstellen derart erfolgt, dass das Substrat (1) eine Keramik umfasst, welche die Oberflächenstruktur (2) bildet.

8. Verfahren nach mindestens einem der Ansprüche 1 bis 6, wobei das Bereitstellen derart erfolgt, dass die Oberflächenstruktur (2) als Hauptbestandteil ein Refraktärmetall umfasst.

9. Verfahren nach Anspruch 8, wobei die Oberflächenstruktur (2) durch Elektronenstrahlschmelzen hergestellt wird.

10. Verfahren nach mindestens einem der Ansprüche 1 bis 6, wobei das Bereitstellen derart erfolgt, dass die Oberflächenstruktur (2) durch selektives Laserschmelzen hergestellt wird, beispielsweise mit Aluminium oder Kupfer als Hauptbestandteil.

11. Verfahren nach mindestens einem der vorhergehenden Ansprüche, wobei das generative Herstellen mittels LaserPulverauftragschweißen durchgeführt wird und wobei während des generativen Herstellens ein Pulverfokus (7) zwischen der Oberflächenstruktur (2) und einem Laserfokus (8) eingestellt wird.

12. Werkstück (100) umfassend eine Grundfläche (3), wobei ein Herstellungsverfahren für das Werkstück (100) das generative Herstellen eines Materials (5) für das Werkstück (100) auf einer vorbestimmten Oberflächenstruktur (2) eines Substrats (1) umfasst und wobei die Oberflächenstruktur (2) die Grundfläche (3) definiert.
